# EUROPÄISCHE PATENTSCHRIFT

(11) **EP 0 953 927 B1**
(45) Veröffentlichungstag und Bekanntmachung des Hinweises auf die Patenterteilung: **08.10.2003**
(21) Anmeldenummer: 99108314.8
(22) Anmeldetag: 23.04.1999
(51) Int. Cl.: G06F 17/60

(54) **Verfahren zur Herstellung und/oder Bearbeitung eines Dokumentes**
Method of creation and/or processing of a document
Procédé de création et/ou de traitement d'un document

(30) Priorität: 30.04.1998 DE 19819493
(43) Veröffentlichungstag der Anmeldung: 03.11.1999
(73) Patentinhaber: Dekra Automobil GmbH, 70565 Stuttgart (DE)
(72) Erfinder: Litz, Udo, 70197 Stuttgart (DE)
(74) Vertreter: Patentanwalts-Partnerschaft, Rotermund + Pfusch + Bernhard

(56) Entgegenhaltungen:
- EP-A- 0 375 145
- GB-A- 2 319 863
- GROSS ET AL.: "Computer-supported cooperative work and the Internet" PROCEEDINGS OF THE SEVENTH INTERNATIONAL WORKSHOP ON DATABASE AND EXPERT SYSTEMS APPLICATIONS, 9. - 10. September 1996, Seiten 425-430, XP010200906 Zurich, CH ISBN: 0-8186-7662-0
- JACOBS ET AL.: "Filling HTML forms simultaneously: CoWeb - architecture and functionality" COMPUTER NETWORKS AND ISDN SYSTEMS, Bd. 28, Nr. 11, 1. Mai 1996 (1996-05-01), Seiten 1385-1395, XP004018236 Amsterdam, NL ISSN: 0169-7552

## Beschreibung

Die Erfindung betrifft ein Verfahren zur Herstellung und/oder Bearbeitung von Dokumenten, bei dem eine Serveranordnung mit Datenspeicher bzw. -bank im Internet betrieben wird und über das Internet im Datenspeicher bzw. in der Datenbank der Serveranordnung von einem offenen Teilnehmerkreis vereinzelbare Dokumente initiierbar sind, die einerseits für den das jeweilige Dokument initiierenden Teilnehmer und andereseit für weitere Teilnehmer über das Internet zugänglich bleiben bzw. werden.

Bei der Abwicklung einer Vielzahl von Arbeiten müssen verschiedene Fachleute zusammenwirken. Soweit bei derartigen Kooperationen Dokumente erstellt werden müssen, werden regelmäßig von einem Kooperationsteilnehmer erstellte Teildokumente bzw. die diese Teildokumente repräsentierenden Daten den jeweils anderen Kooperationspartnern zugesandt, die dann ihrerseits auf der Basis dieser Teildokumente tätig werden bzw. weiterarbeiten und die von ihnen erarbeiteten weiteren Teildokumente bzw. weiteren Daten an den Kreis der Kooperationspartner weiterleiten.

Für die Informationsübertragung werden heute oftmals elektronische Systeme eingesetzt. Soweit derartige Informationssysteme für geschlossene Teilnehmerkreise, beispielsweise in Unternehmen oder Verbänden vorgesehen sind, besitzt jeder Teilnehmer eine persönliche Datenverarbeitungsanlage mit elektronischem Briefkasten, so dass an jedem Arbeitsplatz zugesandte Dokumente bildlich dargestellt, ausgedruckt und weiterverarbeitet sowie danach als neue Dokumente erneut beliebig versandt werden können.

Hier werden also im Verlauf der Zusammenarbeit mehrerer Teilnehmer bei der Erstellung eines gemeinsamen Dokumentes laufend Teil- bzw. Zwischendokumente versandt, weil beispielsweise ein erster Teilnehmer ein von ihm erarbeitetes Teildokument zumindest einem weiteren Teilnehmer zuleitet, der durch seine das Teildokument ergänzende Arbeit ein Zwischendokument schafft, welches nachfolgend an einen anderen Teilnehmer zur weiteren Bearbeitung gesandt wird usw., wobei in der Endphase der Erstellung des Dokumentes gegebenenfalls ein Teilnehmer mehrere Teil- bzw. Zwischendokumente zusammenfassen und das damit fertiggestellte Enddokument an eine Vielzahl mitarbeitender Teilnehmer senden muß.

Derartige Systeme erfordern einerseits die Übertragung großer Datenmengen und andererseits Datenverarbeitungsanlagen mit zueinander kompatiblen Betriebssystemen an den jeweiligen Arbeitsplätzen. Der entsprechende Investitionsaufwand ist in der Regel nur gerechtfertigt, wenn an den Arbeitsplätzen ständig persönliche Datenverarbeitungsanlagen mit hoher Leistungsfähigkeit für separate, von Kooperationspartnern unabhängige Arbeiten benötigt werden.

Beispiele für derartige Systeme werden in den nachfolgend angegebenen Druckschriften beschrieben: GB-A 23 19 863, EP-A 0 375 145, US 5 664 183, US 5 615 336, WO 97/05554, Hewlett-Packard Journal, April 1994, S. 23 bis 36, Proceeding of the 7^{th} International Workshop on Database and Export Systems Applications, September 1996, S. 425 bis 430 (ISBN 0-8186-7662-0) und Computer Networks and ISDN Systems, Mai 1996, S. 1385 bis 1395 (ISBN: 0169-7552).

Aufgabe der Erfindung ist es nun, eine für prinzipiell beliebige Kooperationspartner preiswürdige Möglichkeit zu gemeinsamer Arbeit zu schaffen.

Diese Aufgabe wird erfindungsgemäß dadurch gelöst, dass mittels eines auf der Serveranordnung installierten Betriebssystems bei Initiierung eines Dokumentes durch einen Teilnehmer ein Leerdokument (Datenrahmen) mit für den initiierenden Teilnehmer sowie für von diesem Teilnehmer vorgebbare weitere Teilnehmer nutzbaren Leerfeldern generiert oder kopiert wird, dass der das Dokument initiierende Teilnehmer Daten in einem Feld ablegen bzw. verändern und die vom initiierenden Teilnehmer vorgegebenen weiteren Teilnehmer jeweils Daten in anderen Feldern ablegen bzw. verändern können, und dass jeder der vorgenannten Teilnehmer in der Serveranordnung für das Dokument ein eigenes Aktenzeichen ablegen und danach das Dokument unter diesem Aktenzeichen in der Serveranordnung aufrufen kann.

Die Erfindung beruht auf dem allgemeinen Gedanken, die Serveranordnung im Internet als virtuellen Arbeitstisch zu benutzen, auf dem ein Teilnehmer ein Dokument erstellt und auslegt, welches dann für von ihm bestimmte weitere Teilnehmer auf dem Tisch sichtbar wird, wobei die bestimmten Teilnehmer gegebenenfalls, wenn sie vom initiierenden Teilnehmer entsprechend früh vorgegeben werden, die Erstellung des initiierten Dokumentes bzw. Dokumententeiles noch vor dessen Fertigstellung beobachten können.

Hierbei benötigen die Teilnehmer jeweils nur die technischen Voraussetzungen zum Zugang zur Serveranordnung sowie zur Darstellung der im Server erstellten Dokumente bzw. Teildokumente, d.h. die Teilnehmer müssen lediglich selektive "Sichtverbindung" mit dem virtuellen Arbeitstisch haben bzw. erhalten.

Gemäß einer bevorzugten Ausführungsform der Erfindung generiert die Serveranordnung für jeden Teilnehmer, zumindest wenn dieser in Kommunikation mit der Serveranordnung tritt, ein Hinweissignal auf dem vorgenannten Teilnehmer zugängliche, von andern Teilnehmer initiierte Dokumente.

Auf diese Weise wird der Blick eines Teilnehmer beim Zutritt zum virtuellen Arbeitstisch automatisch auf die für ihn wichtigen Dokumente gelenkt.

In diesem Zusammenhang ist insbesondere vorgesehen, dass das Betriebssystem Aufrufe von Dokumenten durch Teilnehmer protokolliert und jedem Teilnehmer, zumindest bei einer von diesem Teilnehmer aufgenommenen Kommunikation mit der Serveranordnung, eine Meldung über ihm zugängliche, von anderen Teilnehmern initiierte, von dem genannten Teilnehmer aber noch nicht aufgerufene und damit für den genannten Teilnehmer neue Dokumente zuleitet.

Gemäß einer weiteren vorteilhaften Ausgestaltung der Erfindung kann vorgesehen sein, dass die Serveranordnung bei Initiierung eines Dokumentes durch einen Teilnehmer ein Leerdokument (Datenrahmen) mit für unterschiedliche Teilnehmer reservierten Leerfeldern generiert bzw. kopiert, wobei der das Dokument initiierende Teilnehmer Daten nur in einem Leerfeld ablegen bzw. nach Ablage verändern kann und die vom initiierenden Teilnehmer vorgegebenen weiteren Teilnehmer jeweils nur Daten in einem anderen Leerfeld ablegen bzw. nach Ablage verändern können.

Auf diese Weise lassen sich die Beiträge verschiedener Teilnehmer zu einem Dokument ohne weiteres erkennen. Gleichzeitig wird gewährleistet, dass jeder am Dokument mitarbeitende Teilnehmer lediglich für seinen Beitrag verantwortlich bleibt und eine Veränderung seines Beitrages durch einen anderen Teilnehmer ausgeschlossen wird.

Im übrigen wird hinsichtlich vorteilhafter Merkmale der Erfindung auf die Ansprüche sowie die nachfolgende Erläuterung der Zeichnung verwiesen, anhand der eine besonders vorteilhafte Ausführungsform der Erfindung beschrieben wird.

Dabei zeigt
- Fig. 1: eine schematische Darstellung eines offenen Datenübertragungsnetzes, welches prinzipiell beliebige Teilnehmer miteinander zu verbinden gestattet und in das die erfindungsgemäße Serveranordnung als Teilnehmer mit besonderen Fähigkeiten einbindbar ist,
- Fig. 2: eine schematisierte Darstellung eines Leerdokumentes sowie
- Fig. 3: eine schematisierte Darstellung eine von der Serveranordnung erzeugbaren Bilddarstellung welche einem Teilnehmer übermittelt wird, sobald dieser eine Kommunikation mit der Serveranordnung aufnimmt.

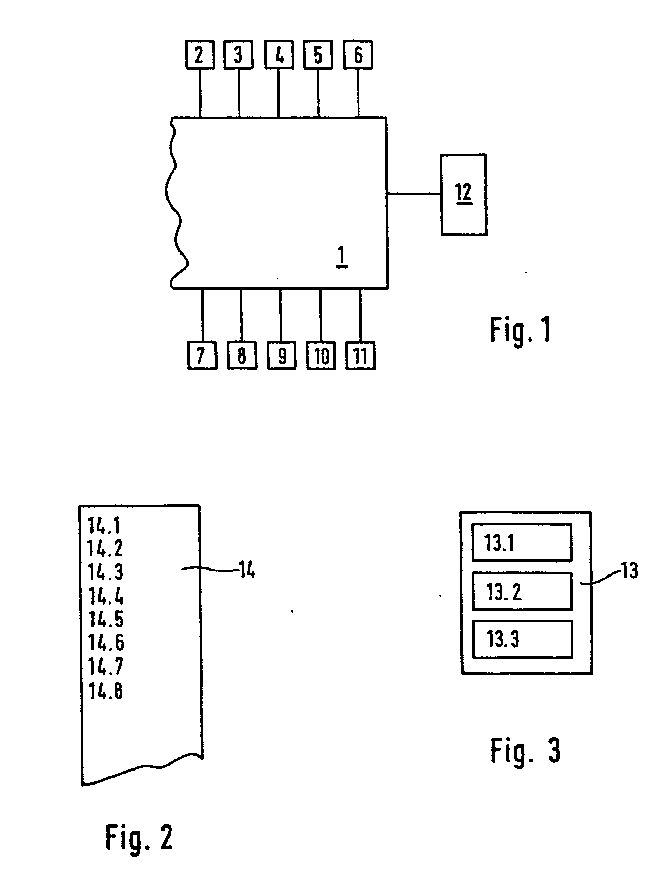

Gemäß Fig. 1 können über ein Datenübertragungsnetz 1, hier das Internet, prinzipiell beliebige Teilnehmer 2 bis 11 miteinander oder - zumindest - mit einer in das Netz 1 eingebundenen Serveranordnung 12 Verbindung aufnehmen, welche in der nachfolgend dargestellten Weise aufgrund ihres installierten Betriebssystems als virtueller, ausgelagerter Arbeitstisch einsetzbar ist.

Die Serveranordnung 12 soll insbesondere beliebig auswählbaren Gruppen aus dem Kreise der Teilnehmer 2 bis 11 die Möglichkeit bieten, gemeinsame Dokumente in Form von Text-, Bild- und/oder Tonaufzeichnungen zu erstellen und in einem Datenspeicher bzw. einer Datenbank der Serveranordnung 12 abzulegen, und zwar derart, dass die an der Erstellung eines Dokumentes mitarbeitenden Teilnehmer Zugriff auf das Dokument behalten.

Wenn nun einer der Teilnehmer 2 bis 11 über das Netz 1 eine Verbindung mit dem Server 12 herstellt, erhält er zunächst von der Serveranordnung 12 eine typischerweise als Bildseite darstellbare Information 13 (vgl. Fig. 3) über auswählbare Möglichkeiten 13.1, 13.2 usw. der von der Serveranordnung 12 erbringbaren Leistungen.

Es sei nun zunächst davon ausgegangen, dass der Teilnehmer 2 von der Möglichkeit 13.1 Gebrauch macht, ein neues Dokument zu erstellen.

Wenn nun der genannte Teilnehmer 2 den entsprechenden Befehl an die Serveranordnung 12 übermittelt, wird ihm von der Serveranordnung 12 ein in Fig. 2 beispielhaft dargestelltes Leerdokument 14 übermittelt, in das der Teilnehmer 2 nun an vorgegebenen Positionen 14.1, 14.2 usw. Einträge vornehmen kann. Wenn der Teilnehmer 2 beispielsweise die Position 14.1 aufruft, so kann er der Serveranordnung 12 ein eigenes Aktenzeichen übermitteln, welches dann von der Serveranordnung 12 derart gespeichert wird, dass der Teilnehmer 2 später das von ihm initiierte Dokument unter dem vorgenannten Aktenzeichen wiederzufinden vermag. Des weiteren kann der Teilnehmer 2 durch Aufruf einer Position 14.2 an die Serveranordnung 12 zur Speicherung im Datenspeicher bzw. in der Datenbank Informationen übermitteln, die den eigentlichen Inhalt oder Teilinhalt des initiierten Dokumentes darstellen, wobei die Serveranordnung 12 innerhalb ihres Datenspeichers bzw. ihrer Datenbank automatisch einen der Informationsmenge angepaßten Speicherraum reserviert.

Wenn der Teilnehmer 2 eine Position 14.3 aufruft, können der Serveranordnung 12 Kennungen weiterer Teilnehmer an die Serveranordnung 12 zur Speicherung in Kombination mit dem initiierten Dokument weitergeleitet werden. Falls der Teilnehmer 2 von dieser Möglichkeit Gebrauch macht, wird das intiierte Dokument automatisch für die vom Teilnehmer 2 benannten weiteren Teilnehmer, z.B. den Teilnehmer 3, einsehbar und ergänzbar, wie weiter unten dargestellt wird.

Der das vorgenannte Dokument initiierende Teilnehmer 2 kann prinzipiell jederzeit auf das in der Serveranordnung initiierte Dokument zugreifen und von ihm eingegebene Informationen zum Inhalt des Dokumentes ergänzen oder verändern.

Zur Ausführung einer derartigen Ergänzung oder Veränderung kann der Teilnehmer 2 beispielsweise bei erneuter Aufnahme einer Kommunikation mit der Serveranordnung 12 unter den dann wiederum angebotenen möglichen Leistungen der Serveranordnung 12 eine Möglichkeit 13.2 (vgl. Fig. 3) auswählen und nachfolgend das dem gesuchten Dokument bei dessen Initiierung zugeordnete eigene Aktenzeichen an die Serveranordnung 12 übermitteln. Sodann eröffnet die Serveranordnung 12 den Zugang zu dem vorgenannten Dokument.

Sobald der Teilnehmer 2 an der Position 14.3 des Dokumentes, durch Übermittelung der entsprechenden Kennungen od.dgl., weitere Teilnehmer, z.B. den Teilnehmer 3, benannt hat, kann dieser Teilnehmer das Dokument ebenfalls aufrufen.

Wenn dieser Teilnehmer 3 eine Kommunikation mit der Serveranordnung 12 aufnimmt, werden ihm in gleicher Weise wie anderen Teilnehmer die verschiedenen Möglichkeiten der Dienstleistungen der Serveranordnung 12, beispielsweise wiederum in Form der Bildseite 13, angeboten. Wenn nun der Teilnehmer 3 die Position 13.3 (vgl. Fig. 3) aufruft, so kann der Teilnehmer 3 unter den von anderen Teilnehmern initiierten Dokumenten beliebige Dokumente aufrufen, in denen er als weiterer Teilnehmer benannt wurde.

Wenn nun der Teilnehmer 3 ein solches Dokument aufgerufen hat, kann er diesem Dokument an einer Position 14.4 ein eigenes Aktenzeichen zuteilen, unter dem der Teilnehmer 3 dieses Dokument später bei einer Aufnahme einer Kommunikation mit der Serveranordnung 12 direkt aufrufen kann. Des weiteren kann der Teilnehmer 3 an einer Position 14.5 durch entsprechenden Datenübertragung an die Serveranordnung 12 eigene Einträge vornehmen, die der Teilnehmer 3 später ergänzen bzw. verändern kann.

Entsprechendes gilt für alle weiteren im Dokument an der Position 14.3 benannten Teilnehmer, wobei gegebenenfalls vorgesehen sein kann, dass diese weiteren Teilnehmer zusätzliche Teilnehmer benennen, die dann ebenfalls in der vorangehend beschriebenen Weise Zugriff auf das Dokument und die Möglichkeit erhalten, an gesonderten Positionen, z.B. 14.6, 14.7 usw. eigene Einträge vorzunehmen, zu ergänzen bzw. zu verändern.

Auf diese Weise kann die Serveranordnung 12 von verschiedenen Teilnehmern 2 bis 11 stammende Informationen zu für diese vorgenannten Teilnehmer gemeinsamen Dokumenten zusammensetzen. Hierbei kann gegebenenfalls vorgesehen sein, dass die Serveranordnung die Zeitfolge der Beiträge der verschiedenen Teilnehmer zu einem Dokument sowie eventuelle Änderungen dieser Beiträge dokumentiert, d.h. aufzeichnet und als unveränderbaren Teil 14.8 des jeweiligen Dokumentes darbietet.

Gegebenenfalls kann die Serveranordnung 12 zwischen privilegierten und nicht privilegierten Teilnehmern unterscheiden. Beispielsweise kann vorgesehen sein, dass privilegierte Teilnehmer 2 bis 6 alle Leistungen, die die Serveranordnung 12 bietet, unbeschränkt nutzen können. Dagegen können nicht privilegierte Teilnehmer, z.B. die Teilnehmer 7 bis 11, ein Dokument nur dann initiieren, wenn sie zu diesem Dokument weitere Teilnehmer aus dem Kreise der privilegierten Teilnehmer benennen, die damit wiederum Zugang zu dem jeweils initiierten Dokument erhalten.

## Patentansprüche

1. Verfahren zur Herstellung und/oder Bearbeitung von Dokumenten (14), bei dem eine Serveranordnung (12) mit Datenspeicher bzw. -bank im Internet (1) betrieben wird und über das Internet im Datenspeicher bzw. in der Datenbank der Serveranordnung von einem offenen Teilnehmerkreis (2 bis 11) vereinzelbare Dokumente initiierbar sind, die einerseits für den das jeweilige Dokument initiierenden Teilnehmer und andererseits für weitere Teilnehmer über das Internet zugänglich bleiben bzw. werden,
**dadurch gekennzeichnet,**
- **dass** mittels eines auf der Serveranordnung (12) installierten Betriebssystems bei Initiierung eines Dokumentes durch einen Teilnehmer ein Leerdokument (Datenrahmen) mit für den initiierenden Teilnehmer sowie für von diesem Teilnehmer vorgebbare weitere Teilnehmer nutzbaren Leerfeldern generiert oder kopiert wird,
- **dass** der das Dokument initiierende Teilnehmer Daten in einem Feld ablegen bzw. verändern und die vom initiierenden Teilnehmer vorgegebenen weiteren Teilnehmer jeweils Daten in anderen Feldern ablegen bzw. verändern können, und
- **dass** jeder der vorgenannten Teilnehmer in der Serveranordnung für das Dokument ein eigenes Aktenzeichen ablegen und danach das ganze Dokument unter diesem Aktenzeichen in der Serveranordnung aufrufen kann.

2. Verfahren nach Anspruch 1,
**dadurch gekennzeichnet,**
**dass** für jeden Teilnehmer bei Kommunikation mit der Serveranordnung ein Hinweissignal auf ihm zugängliche von anderen Teilner initiierte Dokumente generierbar ist.

3. Verfahren nach Anspruch 1 oder 2,
**dadurch gekennzeichnet,**
**dass** das Betriebssystem Aufrufe von Dokumenten durch Teilnehmer protokolliert und jedem Teilnehmer - zumindest bei einer von diesem Teilnehmer aufgenommenen Kommunikation mit der Serveranordnung - eine Meldung über ihm zugängliche, von anderen Teilnehmern initiierte, von dem genannten Teilnehmer noch nicht aufgerufene Dokumente zuleitet bzw. abrufbar macht.

4. Verfahren nach einem der Ansprüche 1 bis 3,
**dadurch gekennzeichnet,**
**dass** von jedem der vom initiierenden Teilnehmer vorgegebenen weiteren Teilnehmer zusätzliche Teilnehmer vorgebbar sind.

5. Verfahren nach einem der Ansprüche 1 bis 4,
**dadurch gekennzeichnet,**
**dass** das ganze Dokument in seinem jeweiligen Zustand für den initiierenden Teilnehmer und alle vorgegebene weitere bzw. zusätzliche Teilnehmer zugänglich und für andere Teilnehmer unzugänglich ist.

6. Verfahren nach einem der Ansprüche 1 bis 5,
**dadurch gekennzeichnet,**
**dass** privilegierte Teilnehmer beliebige weitere oder zusätzliche Teilnehmer vorgeben können.

7. Verfahren nach einem der Ansprüche 1 bis 6,
**dadurch gekennzeichnet,**
**dass** nicht privilegierte Teilnehmer in einem Dokument lediglich privilegierte Teilnehmer als weitere bzw. zusätzliche Teilnehmer bestimmen können.

8. Verfahren nach einem der Ansprüche 1 bis 7,
**dadurch gekennzeichnet,**
**dass** nicht privilegierte Teilnehmer nur bei Bestimmung eines weiteren Teilnehmers aus dem Kreis der privilegierten Teilnehmer ein Dokument initiieren können.

9. Verwendung einer über Internet zugänglichen Serveranordnung mit Datenspeicher bzw. -bank und installiertem Betriebssystem zur Durchführung eines Verfahrens nach einem der Ansprüche 1 bis 8.

## Claims

1. Method for producing and/or editing documents (14) which involves a server arrangement (12) with a data store or database being operated on the Internet (1) and the Internet being able to be used by an open user group (2 to 11) to initiate isolatable documents in the server arrangement's data store or database, said isolatable documents remaining or becoming accessible firstly to the user initiating the respective document and secondly to further users over the Internet,
**characterized**
- **in that** an operating system installed on the server arrangement (12) is used, when a document is initiated by a user, to generate or copy a blank document (data frame) with blank fields which can be used by the initiating user and by further users who can be prescribed by this user,
- **in that** the user initiating the document can store or alter data in a field, and the further users prescribed by the initiating user can each store or alter data in other fields, and
- **in that** each of the aforementioned users can store a dedicated file reference for the document in the server arrangement and can then call the entire document in the server arrangement using this file reference.

2. Method according to Claim 1,
**characterized**
**in that**, when communicating with the server arrangement, each user can have an advice signal generated which indicates documents initiated by other users which he is able to access.

3. Method according to Claim 1 or 2,
**characterized**
**in that** the operating system logs calls for documents by users and supplies each user - at least when this user starts communicating with the server arrangement - with a message about documents initiated by other users which he can access and which he has not yet called, or allows him to retrieve said message.

4. Method according to one of Claims 1 to 3,
**characterized**
**in that** each of the further users prescribed by the initiating user can prescribe additional users.

5. Method according to one of Claims 1 to 4,
**characterized**
**in that** the entire document in its respective state can be accessed by the initiating user and by all prescribed further or additional users and cannot be accessed by other users.

6. Method according to one of Claims 1 to 5,
**characterized**
**in that** privileged users can prescribe any further or additional users.

7. Method according to one of Claims 1 to 6,
**characterized**
**in that** non-privileged users can specify only privileged users as further or additional users in a document.

8. Method according to one of Claims 1 to 7,
**characterized**
**in that** non-privileged users can initiate a document only when specifying a further user from the group of privileged users.

9. Use of a server arrangement, which can be accessed over the Internet, with a data store or database and an installed operating system for carrying out a method according to one of Claims 1 to 8.

## Revendications

1. Procédé pour la réalisation et/ou le traitement de documents (14), dans lequel on exploite un dispositif serveur (12) avec mémoire de données respectivement banque de données sur Internet (1), et dans lequel un groupe ouvert de collaborateurs (2 à 11) peut initialiser par Internet dans la mémoire de données respectivement dans la banque de données du dispositif serveur, des documents séparables qui restent, respectivement deviennent accessibles par Internet d'une part pour le collaborateur ayant initialisé le document correspondant et d'autre part pour d'autres collaborateurs,
**caractérisé en ce que**
- lors de l'initialisation d'un document par un collaborateur, un document vide (cadre de données) avec des champs vides utilisables est généré ou copié par un système d'exploitation installé sur le dispositif serveur (12), pour le collaborateur ayant réalisé l'initialisation ainsi que pour d'autres collaborateurs pouvant être définis par ce collaborateur,
- le collaborateur ayant initialisé le document peut déposer, respectivement modifier des données dans un champ et les autres collaborateurs définis par le collaborateur ayant réalisé l'initialisation peuvent eux déposer, respectivement modifier des données dans d'autres champs et
- chacun des collaborateurs mentionnés précédemment peut déposer une référence dédiée au document dans le dispositif serveur et interroger ensuite le document complet dans le dispositif serveur au moyen de cette référence.

2. Procédé selon la revendication 1, **caractérisé en ce qu'**il est possible, lors de la communication avec le dispositif serveur, de générer pour chaque collaborateur, un signal d'avertissement sur des documents initialisés par d'autres collaborateurs et qui lui sont accessibles.

3. Procédé selon la revendication 1 ou 2, **caractérisé en ce que** le système d'exploitation assure le protocole d'interrogation de documents par des collaborateurs et qu'au moins lors d'une communication avec le dispositif serveur relevée par ce collaborateur, achemine vers chaque collaborateur et respectivement lui permet d'appeler une information sur des documents qui lui sont accessibles, initialisés par d'autres collaborateurs et non encore interrogés par le collaborateur nommé.

4. Procédé selon une des revendications 1 à 3, **caractérisé en ce que** chacun des autres collaborateurs définis par le collaborateur ayant réalisé l'initialisation peut définir des collaborateurs supplémentaires.

5. Procédé selon une des revendications 1 à 4, **caractérisé en ce que** le document complet dans son état actuel est accessible pour le collaborateur ayant réalisé l'initialisation et pour tous les autres collaborateurs définis respectivement collaborateurs supplémentaires, et n'est pas accessible pour d'autres collaborateurs.

6. Procédé selon une des revendications 1 à 5, **caractérisé en ce que** des collaborateurs privilégiés peuvent définir n'importe quels autres collaborateurs ou collaborateurs supplémentaires.

7. Procédé selon une des revendications 1 à 6, **caractérisé en ce que** des collaborateurs non privilégiés ne peuvent définir dans un document que des collaborateurs privilégiés comme autres collaborateurs respectivement collaborateurs supplémentaires.

8. Procédé selon une des revendications 1 à 7, **caractérisé en ce que** des collaborateurs non privilégiés ne peuvent initialiser un document que lors de la définition d'un autre collaborateur du groupe des collaborateurs privilégiés.

9. Utilisation d'un dispositif serveur accessible par Internet avec mémoire de données respectivement banque de données et système d'exploitation installé pour l'exécution d'un procédé selon une des revendications 1 à 8.
